(19) Europäisches Patentamt
European Patent Office
Office européen des brevets

(11) EP 4 403 889 A1

(12) EUROPEAN PATENT APPLICATION

(43) Date of publication:
24.07.2024 Bulletin 2024/30

(51) International Patent Classification (IPC):
G01J 3/26 (2006.01)   G02B 5/28 (2006.01)

(21) Application number: 23217026.6

(52) Cooperative Patent Classification (CPC):
G01J 3/26; G02B 5/284

(22) Date of filing: 15.12.2023

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 11.01.2023 CH 212023

(71) Applicant: Institut Fédéral de Métrologie METAS
3084 Wabern (CH)

(72) Inventors:
• Bernasconi, Johana
  1822 Chernex (CH)
• Blattner, Peter
  2000 Neuchâtel (CH)

(74) Representative: P&TS SA (AG, Ltd.)
Avenue J.-J. Rousseau 4
P.O. Box 2848
2001 Neuchâtel (CH)

(54) **FABRY PEROT ETALON FOR THE CALIBRATION OF A SPECTROMETER**

(57) The present disclosure concerns a Fabry-Perot etalon (1) for calibrating the wavelength scale of a spectrometer and comprising a first substrate and a second substrate (12), each substrate (11, 12) comprising a material transparent to light in the wavelength range 100-3000 nm, a spacer layer (15) extending between the first and second substrates (11, 12) and having a thickness (H); each substrate (11, 12) comprising an inner surface (19) facing each other with the spacer layer (15) therebetween, each inner surface (19) comprising a reflector layer (16) acting as a partially transmitting mirror, such that a light beam can be inputted through one of the substrates (11, 12), multiply reflected between the reflector layers (16) to produce a transmitted light ray outputted through the other substrate (12, 11), the transmitted light ray having a power that varies with its wavelength. The spacer layer (15) comprises a gas or a gas mixture, and has a thickness (H) between 1 μm and 50 μm. The present disclosure further concerns a method for fabricating the Fabry-Perot etalon.

Fig. 1

EP 4 403 889 A1

## Description

### Technical domain

The present invention concerns a Fabry-Perot etalon for calibrating the wavelength scale of a spectrometer, spectroradiometer, spectrophotometer, spectrograph or spectroscope and a method for fabricating the Fabry-Perot etalon.

### Related art

Traditionally, spectrometers are calibrated using light sources emitting at physically determined lines. But typical lamps used, like HgAr lamps, do not provide a very fine sampling over a large wavelength range.

### Summary

The present disclosure concerns a Fabry-Perot etalon (or Fabry-Perot interferometer) for calibrating the wavelength scale of a spectrometer (or spectroradiometer).

Fabry-Perot etalons are widely used in telecommunications, lasers, and spectroscopy to control and measure the wavelengths of light. Air-spaced etalons are used to control the centre wavelength and bandwidth of UV-NIR laser.

More particularly, the present disclosure concerns a Fabry-Perot etalon comprising a first substrate and a second substrate, each substrate comprising a material transparent to light in the wavelength range 100-3000 nm. The Fabry-Perot etalon further comprises a spacer layer extending between the first and second substrates and having a thickness. Each substrate comprises an inner surface facing each other with the spacer layer therebetween. Each inner surface comprises a reflector layer acting as a partially transmitting mirror, such that a light beam can be inputted through one of the substrates, multiply reflected between the reflector layers to produce a transmitted light ray outputted through the other substrate, the transmitted light ray having a power that varies with its wavelength. The spacer layer comprises a gas or a gas mixture, and has a thickness between 1 $\mu$m and 50 $\mu$m.

The Fabry-Perot etalon disclosed herein allows accurate calibration of the pixel-to-wavelength relationship of a spectrometer in a time efficient way.

The Fabry-Perot etalon produces a high number of resonant wavelengths in the wavelength range of interest.

The present disclosure further concerns a method for fabricating the Fabry-Perot etalon.

### Short description of the drawings

Exemplar embodiments of the invention are disclosed in the description and illustrated by the drawings in which:

Fig. 1 shows a cross-section view of a Fabry-Perot etalon, according to an embodiment;

Fig. 2 shows a top view of the Fabry-Perot etalon, according to an embodiment;

Fig. 3 shows a simulation of the transmission spectrum of the Fabry-Perot etalon;

Fig. 4 illustrates a schematic of the setup used to measure the transmission of the Fabry-Perot etalon;

Fig. 5 reports the differences of resonant wavelengths between the simulated transmission spectrum of the Fabry-Perot etalon and the measured resonance wavelengths of the Fabry-Perot etalon, a HgAr lamp and a tunable laser with well know wavelengths, as well as a fitted polynomial; and

Fig. 6 reports the residual errors after the correction of the pixel-to-wavelength transformation of a spectrometer with the polynomial with the Fabry-Perot, the HgAr lamp and the tunable laser.

### Examples of embodiments

A Fabry-Perot etalon consists of a cavity formed by two partially transmitting mirrors in a plane parallel configuration at a given separation distance. The transmission of a Fabry-Perot etalon shows a specific resonance pattern with given wavelength peaks.

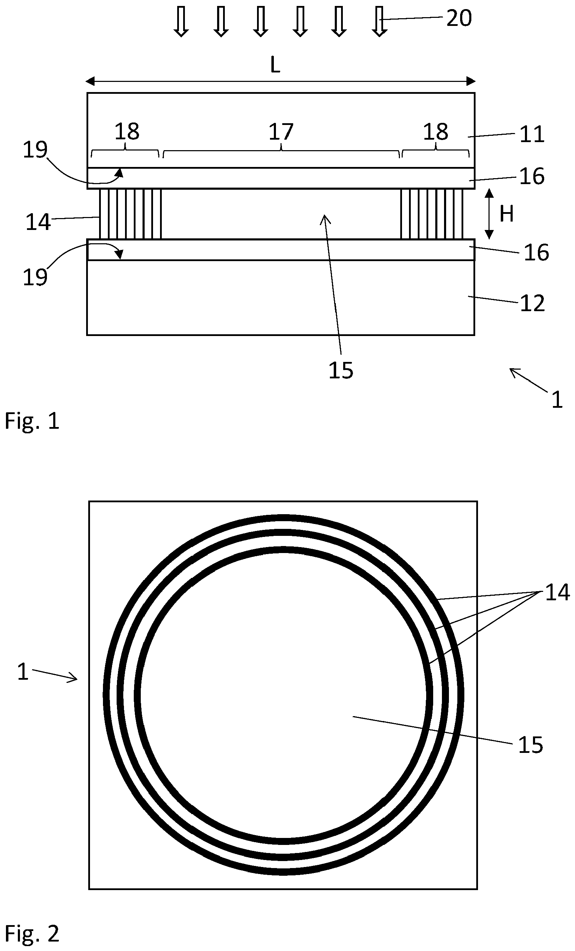

**Fig. 1** shows a cross-section view of a Fabry-Perot etalon 1, according to an embodiment. The Fabry-Perot etalon 1 comprises a first substrate 11 and a second substrate 12, each substrate 11, 12 comprising a material transparent to light in the wavelength range 100-3000 nm. The first substrate 11 and a second substrate 12 can comprise an optical window. An optical window is a flat, optically transparent plate that is designed to maximize transmission in a specified wavelength range, here between 100 and 3000 nm, while minimizing reflection and absorption. For example, the first substrate 11 and a second substrate 12 can comprise silica glass, calcium Fluoride ($CaF_2$), sapphire, magnesium fluoride ($MgF_2$), Gorilla® glass, or other appropriate materials. The first and second substrates 11, 12 can be slightly wedge-shaped to suppress interference due to the outer surfaces.

The Fabry-Perot etalon 1 further comprises a spacer layer 15 extending between the first and second substrates 11, 12 and having a length L and thickness H. Each substrate 11, 12 comprises an inner surface 19 facing each other with the spacer layer 15 therebetween. Each inner surface 19 comprises a reflector layer 16 acting as a partially transmitting mirror, such that a light beam 20 can be inputted through one of the substrates 11, 12 multiply reflected between the reflector layers 16 to produce a transmitted light ray outputted through the other substrate 12, 11. The power (intensity or flux of radiant energy) of the transmitted light ray varies with the wavelength of the transmitted light ray.

The spacer layer 15 comprises a gas or gas mixture having a dispersion that is known to an accuracy of at least 0.02%. In one aspect, the gas or gas mixture comprises air.

The spacer layer 15 has a thickness H between 1 $\mu$m and 50 $\mu$m. The Fabry-Perot etalon 1 with the spacer layer 15 having a thickness H between 5 $\mu$m and 15 $\mu$m is adapted for the visible part of the spectrum, matching the resolution of a spectrometer in visible light.

In an embodiment, the Fabry-Perot etalon 1 comprises a spacing element 14 arranged between the first and second substrates 11, 12. The spacing element 14 is configured to determine the thickness H of the spacer layer 15. The spacing element 14 can comprises a photosensitive resist, such as AZ 9260. The thickness of the spacing element 14 corresponds to the thickness of the spacer layer 15.

The spacing element 14 can be arranged at the periphery of the substrates 11, 12 such as to define an active area 17 where the light beam 20 can enter, and exit, the first and second substrate 11, 12 can, and an inactive area 18 where the light beam 20 is blocked by the spacing element 14. The active area 17 of the Fabry-Parot etalon 1 can have a diameter between 1 mm and 50 mm or possibly between 5 mm and 20 mm. More generally, the active area 17 can thus have a surface area between 0.5 mm$^2$ and 2000 mm$^2$. The spacing element 14 can also be arranged such as to define the active area 17 having a rectangular shape, an elliptical shape, or any other suitable shape.

**Fig. 2** shows a top view of the Fabry-Perot etalon 1, according to an embodiment. The spacing element 14 comprises several concentric rings (three are shown in Fig. 2) defining a disc-shaped spacer layer 15 where the light beam 20 can be inputted and multiply reflected between the reflector layers 16. Alternatively, the spacing element 14 can comprise other structure shapes, for example an elliptical or rectangular structure defining, respectively, an elliptical or a rectangular spacer layer 15.

The width of the resonant wavelengths (also called interference maxima or transmission peaks) directly depends on the Finesse F of the Fabry-Perot etalon 1 at that wavelength. The Fabry-Perot etalon 1 should produce a high number of resonant wavelengths in the wavelength range of interest. The Finesse F and number of resonant wavelengths depend on design parameters of the Fabry-Perot etalon 1, and in particular on the optical properties of the reflector layers 16 and the length L and material of the shaped spacer layer 15. The number of resonant wavelengths and their spacing is given by the optical length of the cavity (i.e., the thickness H of the spacer layer 15) and the Finesse F is related to the reflectivity R of the reflector layer 16 by Equation 1.

$$F = \frac{\pi \sqrt{R}}{1-R} \tag{1}.$$

In an embodiment, the reflector layer 16 comprises a reflective layer having a thickness between 5 nm and 20 nm in thickness. For example the reflector layer 16 can have a thickness of about 15 nm.

In one aspect, the reflectivity R of the reflector layer 16 is such that the Finesse F is between 0.1 and 10 or between 0.2 and 6. These Finesse values are advantageous for fitting the wavelength scale between the resonance wavelengths.

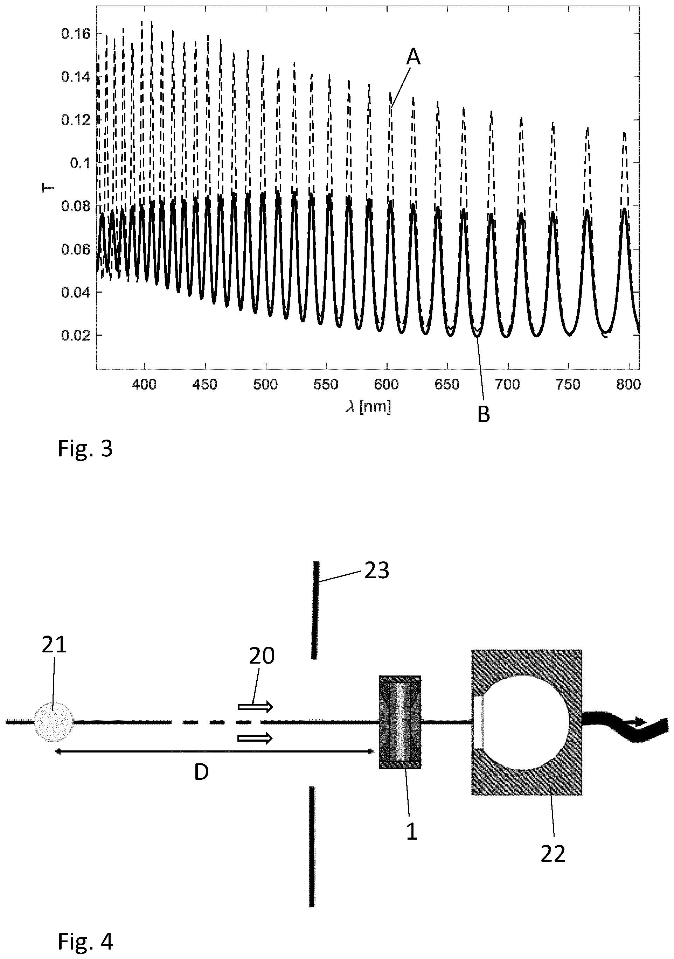

Knowing the above parameters allows for modelling the transmission spectrum of the Fabry-Perot etalon 1. **Fig. 3** shows a simulation of the transmission spectrum of the Fabry-Perot etalon 1 (curve A), considering a light beam 20 having wavelengths in the visible part of the spectrum and a spacer layer 15 having a thickness H of 10 $\mu$m. The position of the resonant wavelengths of the simulated transmission spectrum can be used to find the error on the wavelength-to-pixel transformation of a spectrometer with a good sampling over a large wavelength range (here 31 points between 350 nm and 800 nm).

In an embodiment, a method for fabricating the Fabry-Perot etalon 1 comprises the steps of:

depositing a reflector layer 16 on the inner surface 19 of the first and second substrates 11, 12;

depositing the spacing element 14 on the reflector layers 16 of the first substrate 11; and

assembling the second substrate 12 on the first substrate 11 comprising the spacing element 14.

In the two later steps, the first and second substrates 12 are interchangeable.

Depositing a reflector layer 16 can comprise depositing at least a reflective layer of known optical properties (complex refractive index as a function of wavelength) .

The reflective layer 16 can comprise any type of reflective surface such as nickel (Ni), silver (Ag), aluminum (Al), chromium (Cr), bare glass with 4% reflection, or a multilayer mirror. Preferably, the reflective layer should have known optical properties, a given Finesse F, "smooth optical" properties over the considered spectral domain to avoid distortion of the transmission spectrum, stable optical properties in time (no oxidation of the reflective layer), and stable optical properties with variation in thickness of the layer ($\pm$ 1-2 nm due to the deposition process).

Depositing the spacing element 14 can comprise coating the reflector layers 16 with a photosensitive resist and pattern the deposited photosensitive resist to obtain the final structure of the spacing element 14. The photosensitive resist can be a positive photoresist such as AZ 9260, or a negative photoresist.

Once the second substrate 12 is assembled on the first substrate 11 comprising the spacing element 14, the Fabry-Perot etalon 1 comprises an air spacing between the two reflector layers 16, wherein the spacing element 14 forms the spacing layer 15. The assembly can be made in a lens tube with apertures at each end of the tube, restricting the field to the region without the spacing element 14 (active area 17).

The step of depositing the spacing element 14 comprising coating the reflector layers 16 with a photosensitive resist allows for controlling the thickness of the spacer layer 15 over the whole active area 17 of the Fabry-Parot etalon 1. For example, a variation in a 10 $\mu$m thick spacer layer 15 can be 0.006 $\mu$m, ensuring a calibration within 100 picometer (pm) over a diameter of the active area 17 of 2.54 cm. In other words, the step of depositing the spacing element 14 can be performed with a variation of the thickness of the spacer layer 15 within 0.002 $\mu$m for a spacer layer 15 of 10 $\mu$m in thickness, and over the active area 17 having a surface area of 79 mm$^2$ (or a diameter of 1 cm for a circular active area 17).

The transmission of the Fabry-Perot etalon 1 can be measured with a collimated light beam 20 of a light source 21 having a broadband spectrum. **Fig. 4** shows an exemplary schematic of the setup used to measure the transmission of the Fabry-Perot etalon 1. The light source 21 can comprise a broadband light source placed at a distance D of few centimeters to 1 m of the Fabry-Perot etalon 1. The broadband light source can comprise a halogen lamp, a white light LED, etc. For example, the light beam 20 can have an angular extent smaller than $\pm$1°. Input optics of a spectrometer 22 arranged on the side of the Fabry-Perot etalon 1 opposite to the light source 21 collects the light coming out of the Fabry-Perot etalon 1. The input optics can comprise an integrated sphere. An aperture 23 can be used to avoid having too much stray light. Here, the active area 17 of the Fabry-Parot etalon 1 has a diameter of 15 mm. All the light going through the Fabry-Parot etalon 1 is collected by the spectrometer 22.

The spectrum of the light source 21 can first be measured and used as a spectrum reference. The transmission of the Fabry-Perot etalon 1 can then be determined by dividing the measurement of the light coming out of the Fabry-Perot etalon 1 by the spectrum reference. The measured positions of the Fabry-Perot resonance wavelengths depend on the pixel-to-wavelength transformation of the spectrometer 22.

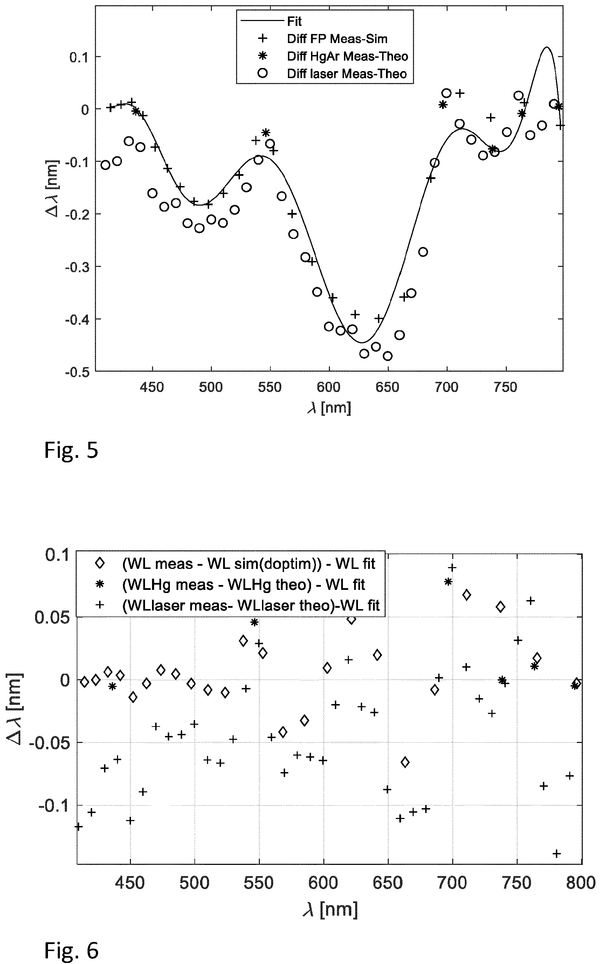

Once the transmission of the Fabry-Perot etalon 1 is known, the differences between the measured positions and the known positions of the resonance wavelengths of the modelled Fabry-Perot etalon 1 (crosses) are computed for each wavelength. The differences are reported in **Fig. 5** and can be used to fit a polynomial (line) to approximate the pixel-to-wavelength transformation function of the spectrometer 22. Here, the polynomial fit used has a degree of nine. The lines of an HgAr lamp with known peaks can also be measured to provide some additional reference points (stars) where the wavelength is defined by the physical properties of the gas in the lamp. One line of the HgAr measurements is used in the algorithm to find the accurate thickness H between the two reflector layers 16 by using an optimization algorithm. This is required since the length L of the of spacer layer 14 is only known from the theoretical mechanical design with a low precision. Some measurements over the spectral range are acquired with a tunable laser (circles) and a high-resolution spectrometer in order to validate the results from the Fabry-Perot etalon 1 in the wavelength range where there is no HgAr line.

In Fig. 5, the reference points corresponding to HgAr wavelength at 738.398 nm was chosen as fitting point. Once the polynomial is determined, the correction can be applied to the simulated transmission spectrum of the Fabry-Perot etalon 1 (curve B in Fig. 3). The difference in amplitude is due to the slit function of the spectrometer 22.

**Fig. 6** reports the residual errors after the correction of the pixel-to-wavelength transformation of the spectrometer 22 with the polynomial with the Fabry-Perot etalon 1 (diamonds), the HgAr lamp (squares) and the tunable laser (circles). The measurement of the light coming out of the Fabry-Perot etalon 1 and the HgAr measurements show a good agreement. The residual errors after the polynomial fit are within $\pm$80 pm for the Fabry-Perot etalon 1 and the HgAr measurements.

The Fabry Perot etalon 1 disclosed herein allows for calibrating a spectrometer with improved distribution of the known peaks, compared to when using only a lamp which known lines are distributed unevenly. The Fabry Perot etalon 1 is significantly faster compared to using a tunable laser and does not rely on another device (here the high-resolution spectrometer). The Fabry Perot etalon 1 is also cheaper than using a tunable laser.

Reference symbols in the figures

1       Fabry-Perot etalon
11      first substrate
12      second substrate
14      spacing element
15      spacerlayer
16      reflector layer
17      active area
18      inactive area
19      inner surface
20      light beam
21      light source
22      spectroradiometer
23      aperture

D       distance between light source and Fabry-Perot interferometer
F       Finesse
H       thickness of spacer layer
L       length of spacer layer
R       reflectivity

**Claims**

1.  A Fabry-Perot etalon (1) destined to calibrate the wavelength scale of a spectrometer, the Fabry-Perot etalon (1) comprising:

    a first substrate (11) and a second substrate (12), each substrate (11, 12) comprising a material transparent to light in the wavelength range 100-3000 nm;
    a spacer layer (15) extending between the first and second substrates (11, 12) and having a thickness (H);
    each substrate (11, 12) comprising an inner surface (19) facing each other with the spacer layer (15) therebetween, each inner surface (19) comprising a reflector layer (16) acting as a partially transmitting mirror, such that a light beam inputted through one of the substrates (11, 12) is multiply reflected between the reflector layers (16) and produce a transmitted light ray outputted through the other substrate (12, 11), the transmitted light ray having a power that varies with its wavelength;
    wherein the spacer layer (15) comprises a gas or a gas mixture, and has a thickness (H) between 1 $\mu$m and 50 $\mu$m.

2.  The Fabry-Perot etalon according to claim 1,
    comprising a spacing element (14) arranged between the first and second substrates (11, 12) and configured to determine the thickness (H) of the spacer layer (15).

3.  The Fabry-Perot etalon according to claim 2,
    wherein the spacing element (14) is arranged at each end of the spacer layer (15) such that it determines its thickness (H).

4.  The Fabry-Perot etalon according to claim 3,
    wherein the spacing element (14) comprises rings made of structured photoresist.

5.  The Fabry-Perot etalon according to any one of claims 1 to 4, wherein the gas or gas mixture is air.

6. The Fabry-Perot etalon according to any one of claims 1 to 5, wherein the reflector layer (16) comprises at least a reflective layer.

7. The Fabry-Perot etalon according to claim 6,
wherein the reflectivity (R) of the reflector layer (16) is such that the Finesse (F) of the Fabry-Perot etalon is between 0.1 and 10.

8. The Fabry-Perot etalon according to any one of claims 2 to 7, wherein the spacing element (14) is arranged at the periphery of the substrates (11, 12) such as to define an active area (17) where the light beam (20) can enter, and exit, the first and second substrate (11, 12), the active area (17) of having a surface area between 0.5 mm$^2$ and 2000 mm$^2$.

9. A method for fabricating the Fabry-Perot etalon according to any one of claims 2 to 8, comprising the steps of:

   depositing a reflector layer (16) on the inner surface (19) of the first and second substrates (11, 12);
   depositing the spacing element (14) on the reflector layers (16) of the first substrate (11), the spacing element (14) having a thickness between 1 $\mu$m and 50 $\mu$m; and
   assembling the second substrate (12) on the first substrate (11) comprising the spacing element (14).

10. The method according to claim 9,
wherein said depositing a reflector layer (16) comprises depositing a reflective layer having a thickness between 5 nm and 20 nm in thickness.

11. The method according to claim 9 or 10,
wherein the step of depositing the spacing element (14) comprises coating the reflector layers (16) with a photosensitive resist and pattern the deposited photosensitive resist to obtain the final structure of the spacing element (14).

12. The method according to claim 11,
wherein the step of depositing the spacing element (14) is performed with a variation of the thickness of the spacer layer (15) within 0.002 $\mu$m for a spacer layer (15) of 10 $\mu$m in thickness, over the active area (17) with a surface area of 79 mm$^2$.

Fig. 1

Fig. 2

Fig. 3

Fig. 4

Fig. 5

Fig. 6

Europäisches
Patentamt

European
Patent Office

Office européen
des brevets

# EUROPEAN SEARCH REPORT

Application Number

EP 23 21 7026

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 101 464 535 A (PHOTOP TECHNOLOGIES INC [CN]) 24 June 2009 (2009-06-24)<br>* page 1, paragraph 1 *<br>* page 3, paragraph 6 *<br>* claims 1,2,3,4 *<br>* figures 3,5 * | 1-12 | INV.<br>G01J3/26<br>G02B5/28 |
| X | CN 103 091 757 A (FUZHOU PHOTOP OPTICS CO LTD) 8 May 2013 (2013-05-08)<br>* claims 2,3; figures 2,3 * | 1-12 | |
| X | US 2004/111856 A1 (CHANG SEAN [TW] ET AL) 17 June 2004 (2004-06-17)<br>* paragraphs [0041], [0042]; figures 1,2,9B * | 1-12 | |

TECHNICAL FIELDS
SEARCHED      (IPC)

G01J
G02B

The present search report has been drawn up for all claims

| Place of search | Date of completion of the search | Examiner |
|---|---|---|
| Munich | 11 June 2024 | Hambach, Dirk |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 23 21 7026

This annex lists the patent family members relating to the patent documents cited in the above-mentioned European search report.
The members are as contained in the European Patent Office EDP file on
The European Patent Office is in no way liable for these particulars which are merely given for the purpose of information.

11-06-2024

| Patent document cited in search report | | Publication date | Patent family member(s) | | Publication date |
|---|---|---|---|---|---|
| CN 101464535 | A | 24-06-2009 | NONE | | |
| CN 103091757 | A | 08-05-2013 | NONE | | |
| US 2004111856 | A1 | 17-06-2004 | DE | 10319534 A1 | 15-07-2004 |
| | | | JP | 2004191912 A | 08-07-2004 |
| | | | TW | 555687 B | 01-10-2003 |
| | | | US | 2004111856 A1 | 17-06-2004 |

For more details about this annex : see Official Journal of the European Patent Office, No. 12/82